# EUROPEAN PATENT SPECIFICATION

(11) **EP 4 212 778 B1**
(45) Date of publication and mention of the grant of the patent: **13.03.2024**
(21) Application number: 23150483.8
(22) Date of filing: 05.01.2023
(51) Int. Cl.: F23R 3/14, F23R 3/28

(54) **COMBUSTOR NOZZLE**
BRENNKAMMERDÜSE
BUSE DE CHAMBRE DE COMBUSTION

(30) Priority: 18.01.2022 KR 20220007493
(43) Date of publication of application: 19.07.2023
(73) Proprietor: Doosan Enerbility Co., Ltd., Seongsan-gu Changwon-si, Gyeongsangnam-do 51711 (KR)
(72) Inventor: SHERSHNYOV, Borys, Changwon-si, Gyeongsangnam-do 51632 (KR)
(74) Representative: BCKIP Part mbB

(56) References cited:
- US-A1- 2007 006 587
- US-A1- 2010 101 229
- US-A1- 2014 291 418
- US-A1- 2019 186 749
- US-A1- 2019 346 140
- US-A1- 2020 072 469

## Description

### CROSS REFERENCE TO RELATED APPLICATION

The present application claims priority to Korean Patent Application No. 10-2022-0007493, filed on January 18, 2022.

### 1. Field of the Invention

The present invention relates to a combustor nozzle and, more particularly, to a combustor nozzle including cooling channels.

### 2. Description of the Background Art

A gas turbine is a combustion engine in which a mixture of air compressed by a compressor and fuel is combusted to produce a high temperature gas, which drives a turbine. The gas turbine is used to drive electric generators, aircraft, ships, trains, or the like.

The gas turbine generally includes a compressor, a combustor, and a turbine. The compressor serves to intake external air, compress the air, and transfer the compressed air to the combustor. The compressed air compressed by the compressor has a high temperature and a high pressure. The combustor serves to mix compressed air from the compressor and fuel and combust the mixture of compressed air and fuel to produce combustion gases, which are discharged to the gas turbine. The combustion gases drive turbine blades in the turbine to produce power. The power generated through the above processes is applied to a variety of fields such as generation of electricity, driving of mechanical units, etc.

Fuel is injected through nozzles disposed in respective combustors, wherein the fuel includes gaseous fuel and liquid fuel. In recent years, in order to suppress the emission of carbon dioxide, use of hydrogen fuel or a fuel containing hydrogen is recommended.

However, since hydrogen has a high combustion rate, when such fuels are burned with a gas turbine combustor, the flame formed in the gas turbine combustor approaches and heats the structure of the gas turbine combustor, thereby degrading the reliability of the gas turbine combustor.

Document US 2019 / 0 186 749 A1 discloses nozzle comprising a central tube surrounded by a shroud. The central tube defines an air plenum and, at a rear end, includes an insert connected to an inner surface of the central tube by a perimeter band. A plurality of apertures are formed through the perimeter band that communicate the air plenum with an annular space formed between the inner surface of the central tube and the insert so that an annular discharge channel is formed that opens at the end of the central tube. A fuel plenum is formed between the central tube and the shroud. The fuel plenum is communicated with mixing tubes that surround the shroud.

### SUMMARY OF THE INVENTION

Accordingly, the present invention has been made keeping in mind the above problems occurring in the related art, and an objective of the present invention is to provide a combustor nozzle capable of effectively cooling a central tube and minimizing flame attachment to the central tube and flame backfire.

To this end, the present invention provides a combustor nozzle in accordance with claim 1.

In an aspect of the present invention, there is provided a combustor nozzle including: a central tube; a shroud; and a plurality of cooling channels. The central tube has an internal air flow path, through which air flows from a front-to-rear direction, and an opening hole at a rear end thereof. At least a part of the central tube is inserted into the shroud, a mixing flow path is formed between the shroud and the central tube so that air and injected fuel flow therethrough, and an air inlet is formed at a front end of the shroud. The cooling channel extends rearward from an inlet communicating with the air flow path to an outlet communicating with the mixing flow path while passing through a sidewall portion of the central tube.

In an embodiment, the outlet of the cooling channel may be formed at the rear end of the central tube.

In an embodiment, a first annular flow path may be formed in the sidewall portion of the central tube to allow the plurality of cooling channels to communicate with each other.

In an embodiment, the first annular flow path may be disposed between the inlet and the outlet of the cooling channel.

In an embodiment, an air swirler may be disposed in the air flow path for turning an airflow.

In an embodiment, the air swirler may be disposed to be spaced apart from the rear end of the central tube.

In an embodiment, the air swirler may be disposed behind the inlet of the cooling channel.

In an embodiment, a turbulence-forming member may be disposed in the air flow path for forming a turbulence in the airflow.

In an embodiment, the turbulence-forming member may be disposed to be spaced apart from the rear end of the central tube.

In an embodiment, the turbulence-forming member may be disposed behind the inlet of the cooling channel.

In an embodiment, the plurality of cooling channels may be disposed in parallel in the sidewall portion of the central tube.

In an embodiment, the plurality of cooling channels may be spirally disposed in the sidewall portion of the central tube.

In an embodiment, the opening hole of the central tube may be provided with an expansion part having a flow cross-sectional area increasing toward a rear end thereof.

In an embodiment, the outlet of the cooling channel may be formed at the rear end of the central tube so as to be inclined in axial and radial directions around the expansion part.

In an embodiment, a second annular flow path may be formed around the expansion part and the rear end of the central tube so that one end thereof communicates with all of the outlets of the cooling channels and the other end thereof communicates with the mixing flow path.

A combustor according to a further aspect of the present disclosure includes a combustor nozzle and a duct assembly. The duct assembly is coupled to one side of the nozzle. In the duct assembly, fuel and air are combusted, and the combustion gas is delivered to a turbine. The nozzle includes a central tube, a shroud, and a plurality of cooling channels. The central tube has an internal air flow path, through which air flows from a front-to-rear direction, and an opening hole at a rear end thereof. At least a part of the central tube is inserted into the shroud, a mixing flow path is formed between the shroud and the central tube so that air and injected fuel flow therethrough, and an air inlet is formed at a front end of the shroud. The cooling channel extends rearward from an inlet communicating with the air flow path to an outlet communicating with the mixing flow path while passing through a sidewall portion of the central tube.

In an embodiment, a turbulence-forming member may be disposed in the air flow path for forming a turbulence in the airflow.

In an embodiment, the plurality of cooling channels may be spirally disposed in the sidewall portion of the central tube.

In an embodiment, the opening hole of the central tube may be provided with an expansion part having a flow cross-sectional area increasing toward a rear end thereof.

In another aspect of the present disclosure, there is provided a gas turbine including a compressor, a combustor, and a turbine. The compressor compresses air introduced from the outside. The combustor mixes the compressed air compressed in the compressor and fuel and burns an air-fuel mixture. The turbine includes a plurality of turbine blades to be rotated by combustion gases combusted in the combustor. The combustor includes a combustor nozzle and a duct assembly. The duct assembly is coupled to one side of the nozzle. In the duct assembly, fuel and air are combusted, and the combustion gas is delivered to a turbine. The nozzle includes a central tube, a shroud, and a plurality of cooling channels. The central tube has an internal air flow path, through which air flows from a front-to-rear direction, and an opening hole at a rear end thereof. At least a part of the central tube is inserted into the shroud, a mixing flow path is formed between the shroud and the central tube so that air and injected fuel flow therethrough, and an air inlet is formed at a front end of the shroud. The cooling channel extends rearward from an inlet communicating with the air flow path to an outlet communicating with the mixing flow path while passing through a sidewall portion of the central tube.

According to the combustor nozzle, the combustor, and the gas turbine including the same, the cooling channels are formed in central tubes so that the central tube can be effectively cooled, and flame attachment to the central tube and flame backfire can be minimized.

### BRIEF DESCRIPTION OF THE DRAWINGS

FIG. 1 is a view illustrating the interior of a gas turbine according to a first embodiment of the present disclosure;
FIG. 2 is a view illustrating a combustor of FIG. 1;
FIG. 3 is a longitudinal cross-sectional view illustrating the overall appearance of a nozzle module according to a first embodiment of the present invention;
FIG. 4 is an enlarged view separately illustrating a cooling channel of FIG. 3;
FIG. 5 illustrates a flow rate and temperature distribution at a rear end of a central tube in the nozzle module according to the first embodiment of the present invention;
FIG. 6 is an enlarged view illustrating a cooling channel of a nozzle module according to a second embodiment of the present invention;
FIG. 7 is an enlarged view illustrating a cooling channel of a nozzle module according to a third embodiment of the present invention;
FIG. 8 is an enlarged view illustrating a cooling channel of a nozzle module according to a fourth embodiment of the present invention; and
FIG. 9 illustrates a modified example of FIG. 8.

### DETAILED DESCRIPTION OF THE INVENTION

Hereinafter, exemplary embodiments of the present invention will be described in detail with reference to the accompanying drawings. However, it should be noted that the present invention is not limited thereto.

Terms used herein are used to merely describe specific embodiments, and are not intended to limit the present invention. As used herein, an element expressed as a singular form includes a plurality of elements, unless the context clearly indicates otherwise. Further, it will be understood that the terms "including" or "comprising" specifies the presence of stated features, numbers, steps, operations, elements, parts, or combinations thereof, but does not preclude the presence or addition of one or more other features, numbers, steps, operations, elements, parts, or combinations thereof.

Hereinafter, preferred embodiments of the present invention will be described in detail with reference to the accompanying drawings. It is noted that like elements are denoted in the drawings by like reference symbols as whenever possible. Further, the detailed description of known functions and configurations that may obscure the gist of the present invention will be omitted. For the same reason, some of the elements in the drawings are exaggerated, omitted, or schematically illustrated.

Hereinafter, a combustor nozzle, a combustor, and a gas turbine including the same according to the present invention will be described.

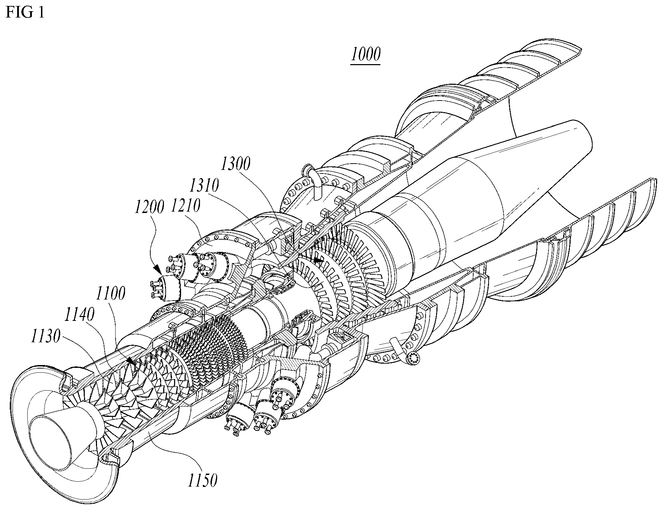

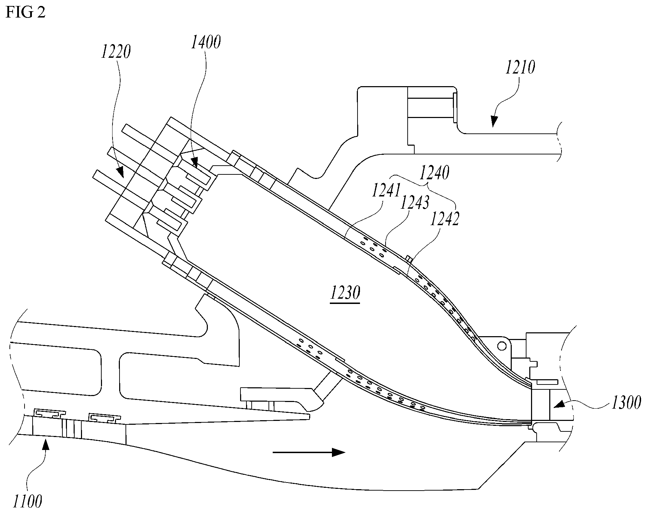

FIG. 1 is a schematic view illustrating the interior of a gas turbine according to an embodiment of the present invention, and FIG. 2 is a schematic view illustrating a combustor of FIG. 1.

The gas turbine will now be described with reference to FIGS. 1 and 2.

An ideal thermodynamic cycle of a gas turbine 1000 according to the present embodiment follows a Brayton cycle. The Brayton cycle consists of four thermodynamic processes: isentropic compression (adiabatic compression), isobaric combustion, isentropic expansion (adiabatic expansion) and isobaric heat ejection. That is, in the Brayton cycle, atmospheric air is sucked and compressed into high pressure air, mixed gas of fuel and compressed air is combusted at constant pressure to discharge heat energy, heat energy of hot expanded combustion gas is converted into kinetic energy, and exhaust gases containing remaining heat energy is discharged to the outside. That is, gases undergo four thermodynamic processes: compression, heating, expansion, and heat ejection.

As illustrated in FIG. 1, the gas turbine 1000 employing the Brayton cycle includes a compressor 1100, a combustor 1200, and a turbine 1300. Although the following description will be described with reference to FIG. 1, the present invention may be widely applied to other turbine engines similar to the gas turbine 1000 illustrated in FIG. 1.

Referring to FIG. 1, the compressor 1100 of the gas turbine 1000 may suck and compress air. The compressor 1100 may serve both to supply the compressed air by compressor blades 1130 to a combustor 1200 and to supply the cooling air to a high temperature region of the gas turbine 1000. Here, since the sucked air undergoes an adiabatic compression process in the compressor 1100, the air passing through the compressor 1100 has increased pressure and temperature.

The compressor 1100 is usually designed as a centrifugal compressor or an axial compressor, and the centrifugal compressor is applied to a small-scale gas turbine, whereas a multi-stage axial compressor is applied to a large-scale gas turbine 1000 illustrated in FIG. 1 since the large-scale gas turbine 1000 is required to compress a large amount of air. In this case, in the multi-stage axial compressor, the compressor blades 1130 of the compressor 1100 rotate according to the rotation of the rotor disks to compress the introduced air and move the compressed air to the compressor vanes 1140 on the rear stage. As the air passes through the compressor blades 1130 formed in multiple stages, the air is compressed to a higher pressure.

The compressor vanes 1140 are mounted inside the housing 1150 in stages. The compressor vanes 1140 guide the compressed air moved from the front side compressor blades 1130 toward the rear-side compressor blades 1130. In one embodiment, at least some of the compressor vanes 1140 may be mounted so as to be rotatable within a predetermined range for adjustment of an air inflow, or the like.

The compressor 1100 may be driven using a portion of the power output from the turbine 1300. To this end, as illustrated in FIG. 1, the rotary shaft of the compressor 1100 and the rotary shaft of the turbine 1300 may be directly connected. In the case of the large-scale gas turbine 1000, almost half of the output produced by the turbine 1300 may be consumed to drive the compressor 1100. Accordingly, improving the efficiency of the compressor 1100 has a direct effect on improving the overall efficiency of the gas turbine 1000.

The turbine 1300 includes a rotor disk 1310 and a plurality of turbine blades and turbine vanes radially disposed on the rotor disk 1310. The rotor disk 1310 has a substantially disk shape on which a plurality of grooves is formed. The grooves are formed to have curved surfaces, and turbine blades and turbine vanes are inserted into the grooves. The turbine vanes are fixed against rotation and guide a flow of combustion gases through the turbine blades. The turbine blades are rotated by combustion gases to generate rotational force.

On the other hand, the combustor 1200 serves to mix the compressed air supplied from an outlet of the compressor 1100 with fuel and combust the mixture at constant pressure to produce hot combustion gases. FIG. 2 illustrates an example of the combustor 1200 provided in the gas turbine 1000. The combustor 1200 may include a combustor casing 1210, nozzles 1220, and a duct assembly 1240.

The combustor casing 1210 may have a substantially circular cylindrical shape in which the nozzles 1220 are surrounded. The nozzle 1220 is disposed downstream of the compressor 1100 and may be disposed along the annular combustor casing 1210. Each nozzle 1220 is provided with at least one nozzle module 1400, through which fuel and air are mixed in an appropriate ratio and injected to achieve a suitable state for combustion.

The gas turbine 1000 may use a gas fuel, in particular, a fuel containing hydrogen. The fuel may include a hydrogen fuel alone or a fuel containing hydrogen and natural gas.

The duct assembly is provided to connect the nozzles 1220 and the turbine 1300 so that the hot combustion gas flows therethrough to heat the duct assembly, whereas the compressed air flows towards the nozzles 1220 along an outer surface of the duct assembly 1240, thereby properly cooling the heated duct assembly 1240.

The duct assembly 1240 may include a liner 1241 and a transition piece 1242, and a flow sleeve 1243. The duct assembly 1240 has a double structure in which the flow sleeve 1243 surrounds the outside of the liner 1241 and the transition piece 1242, so that compressed air penetrates into an annular space inside the flow sleeve 1243 to cool the liner 1241 and the transition piece 1242.

The liner 1241 is a tube member connected to the nozzles 1220 of the combustor 1200, wherein an internal space of the liner 1241 defines the combustion chamber 1230. A longitudinal one side of the liner 1241 is coupled to the nozzle 1220, and the other side of the liner 1241 is coupled to the transition piece 1242.

The transition piece 1242 is connected an inlet of the turbine 1300 to guide the hot combustion gas toward the turbine 1300. A longitudinal one side of the transition piece 1242 is coupled to the liner 1241, and the other side of the transition piece 1242 is coupled to the turbine 1300. The flow sleeve 1243 serves to protect the liner 1241 and the transition piece 1242 while avoiding direct exhaust of hot air to the outside.

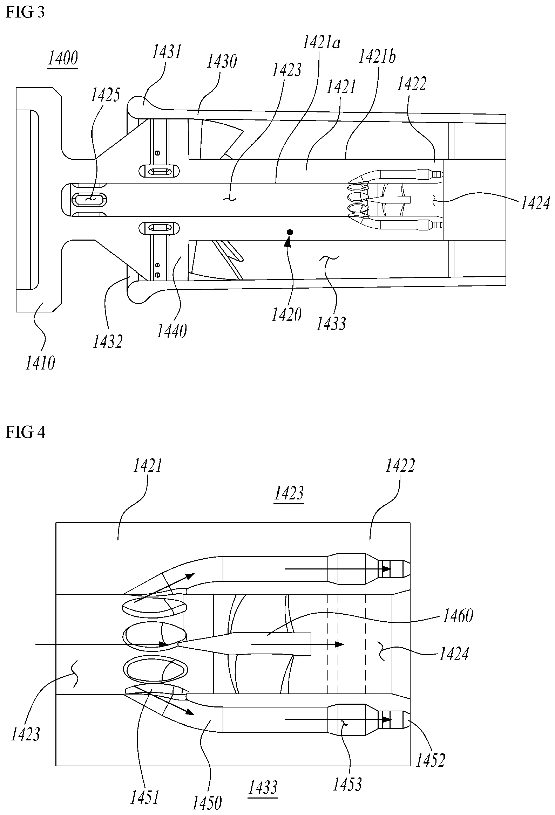

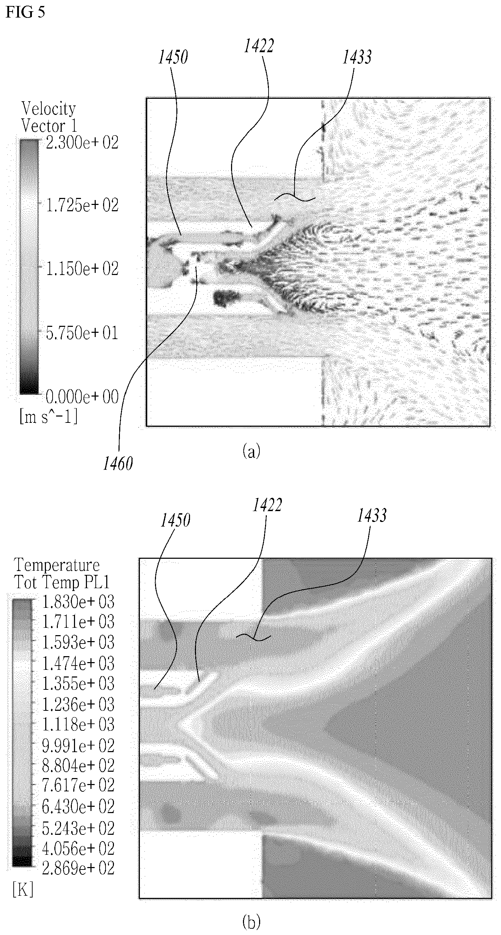

FIG. 3 is a longitudinal cross-sectional schematic view illustrating an overall appearance of a nozzle module according to a first embodiment of the present invention, FIG. 4 is an enlarged schematic view separately illustrating a cooling channel of FIG. 3, and FIG. 5 illustrates a flow rate and temperature distribution at a rear end of a central tube in the nozzle module according to the first embodiment of the present invention.

Hereinafter, the combustor nozzle 1220 according to the first embodiment of the present invention will be described in detail with reference to FIGS. 3 to 5. The combustor nozzle 1220 includes at least one nozzle module 1400, which includes a central tube 1420, a shroud 1430, and a plurality of cooling channels 1450.

The central tube 1420 is a tubular member. The central tube 1420 includes a sidewall portion 1421 having a predetermined thickness. The sidewall portion 1421 has an inner surface 1421a and the outer surface 1421b. The distance between the inner surface 1421a and the outer surface 1421b is the predetermined thickness. The inner surface 1421a forms an air flow path 1423. A flange 1410 may be disposed at a front end of the central tube 1420. The flange 1410 may be supplied with fuel. The air flow path 1423 is formed in an internal space of the central tube 1420 or an internal space defined by the inner surface of the sidewall portion 1421. Air flows in a front-rear direction through the air flow path 1423. An opening hole 1424 may be formed at a rear end 1422 of the central tube 1420. Accordingly, air in the air flow path 1423 may flow to the outside through the opening hole 1424. An air inlet port 1425 may be formed in the central tube 1420. The air inlet port 1425 is supplied with air. The air inlet port 1425 may be formed to pass through the central tube 1420 to allow the inside and outside of the central tube 1420 to communicate with each other. The air inlet port 1425 may be formed at a position slightly spaced apart from the flange 1410 or just behind the flange 1410 in the central tube 1420. The air inlet port 1425 may be disposed at a front end of the air flow path 1423. The air introduced through the air inlet port 1425 may flow in the air flow path 1423 of the central tube 1420.

At least a portion of the central tube 1420 is inserted into the shroud 1430. According to an embodiment, an entire portion of the central tube 1420 excluding the flange 1410 may be inserted into the shroud 1430. According to an embodiment, the portion of the central tube 1420 where the air inlet port 1425 is formed is not inserted into the shroud 1430 so that the air inlet port 1425 may be disposed in front of the shroud 1430.

Air inlets 1432 are formed at a front end of the shroud 1430. Air is introduced through the air inlets 1432. According to an embodiment, a bell mouth 1431 may be formed at the front end of the shroud 1430 to guide air inflow and reduce flow resistance. The shroud 1430 may surround the central tube 1420 in a manner as to be spaced apart from the central tube 1420. Accordingly, a space is formed between the shroud 1430 and the central tube 1420. In the space between the shroud 1430 and the central tube 1420, the air introduced from the air inlets 1432 and the separately injected fuel may flow together. Accordingly, the space is referred to as a mixing flow path 1433.

According to the invention, a fuel port (not depicted) is formed in the central tube 1420. The fuel port is configured to inject fuel into the mixing flow path 1433. Fuel is introduced from the flange 1410 side, and the fuel port may communicate with the flange 1410 side. A fuel plenum (not depicted) to be filled with fuel may be formed on the sidewall portion 1421 side of the central tube 1420. The fuel plenum may extend in the circumferential direction from the sidewall portion 1421 to form an annular space. The fuel plenum may communicate with the flange 1410 side, as well as the fuel port. Accordingly, fuel introduced from the flange 1410 may be injected to the outside from the fuel port through the fuel plenum.

According to an embodiment, a swirler 1440 may be disposed between the central tube 1420 and the shroud 1430. The swirler 1440 may be formed on the inner circumferential surface of the shroud 1430 or the outer circumferential surface of the central tube 1420, or swirlers may be provided separately and coupled to the shroud 1430 and the central tube 1420, respectively. The swirler 1440 is configured to swirl air, or air and fuel. The swirler 1440 may preferably be disposed near the front end of the shroud 1430 or just behind the bell mouth 1431. In addition, the fuel port may be disposed on the swirler 1440. If the swirler 1440 is integrally formed with the central tube 1420, the fuel port may be formed through both the central tube 1420 and the swirler 1440. When the fuel port 1428 is disposed in the swirler 1440, the fuel may be injected directly into the air that starts swirling, which improves performance of mixing air and fuel and also minimizes flame backfire due to the fuel port being separated away from the combustion chamber.

A cooling channel 1450 is formed in the central tube 1420. According to the invention, a plurality of cooling channels 1450 are provided. The cooling channel 1450 includes an inlet 1451 and an outlet 1452. The inlet 1451 of the cooling channel 1450 communicates with the air flow path 1423, and the outlet 1452 communicates with the mixing flow path 1433. According to an embodiment, the cooling channel 1450 may be formed to extend rearward through the sidewall portion 1421 of the central tube 1420. The cooling channel 1450 may be formed between the inner surface 1421a and the outer surface 1421b of the sidewall portion 1421. That is, when viewed in a longitudinal cross section, the cooling channel 1450 may be formed to extend left and right such that upper and lower parts thereof are surrounded by the sidewall portion 1421. The cooling channel 1450 is disposed in the sidewall portion 1421 between the inner surface 1421a and the outer surface 1421b so that a portion of the sidewall portion 1421 is disposed between the cooling channel 1450 and the air flow path 1423 while another portion of the sidewall 1421 is disposed between the cooling channel 1450 and the mixing flow path 1433. The cooling channel 1450 may be formed to extend in an axial direction, which is a direction parallel to the air flow path 1423. The plurality of cooling channels 1450 may be disposed to surround the air flow path 1423 with a portion of the sidewall portion 1421 interposed therebetween. According to an embodiment, the plurality of cooling channels 1450 may be disposed in parallel with each other in the sidewall portion 1421. The air from the airflow path 1423 flows through the cooling channels 1450. The air in the air flow path 1423 is introduced into the cooling channels 1450 and is discharged to the mixing flow path 1433, thereby, the central tube 1420 is being cooled. An opening of an inlet 1451 of the cooling channel 1450 may formed and disposed in an inner surface of the sidewall portion 1421. The inlet 1451 of the cooling channel 1450 may be obliquely formed with respect to the air flow path 1423.

According to an embodiment, the cooling channel 1450 may be formed at a rear end 1422 of the central tube 1420. The rear end 1422 of the central tube 1420 is close to the combustion chamber, so the rear end may be exposed to high temperature. Near the rear end 1422 of the central tube 1420, a flame of the combustion chamber may be backfired and attached thereto. Even though this is not the case, the rear end may be exposed to relatively high temperature because the rear end is close to the combustion chamber. Accordingly, the cooling channel 1450 may preferably be formed at the rear end 1422 of the central tube 1420.

According to an embodiment, a first annular flow path 1453 may be formed in the sidewall portion 1421. The first annular flow path 1453 may be formed in an annular shape by extending in the circumferential direction of the central tube 1420 in the sidewall portion 1421. That is, the first annular flow path 1453 may be arranged in the sidewall portion 1421 such that a part of the sidewall portion 1421 is disposed between the first annular flow path 1453 and the air flow path 1423, while another part of the sidewall portion 1421 is disposed between the first annular flow path 1453 and the mixing flow path 1433. The first annular flow path 1453 may connect and communicate with all of the cooling channels 1450. According to an embodiment, at least a part of the air flowing in the plurality of cooling channels 1450 may be introduced into and flows through the first annular flow path 1453. The first annular flow path 1453 may be formed between the inlet 1451 and the outlet 1452 of the cooling channel 1450. In this case, the air introduced into the inlet 1451 flows into the first annular flow path 1453, then at least a part of the air may circulate in the circumferential direction through the first annular flow path in the sidewall portion 1421, and then is discharged to one of outlets 1452 of cooling channels 1450. As the first annular flow path 1453 is formed in the sidewall portion 1421, an airflow may be uniformly formed in the plurality of cooling channels 1450.

According to an embodiment, an air swirler 1460 may be disposed in the air flow path 1423. The air swirler 1460 is configured to swirl an airflow in the air flow path 1423 of the central tube 1420. The air swirler 1460 may include a plurality of turning wings (not shown). Air passing through the air swirler 1460 may be swirled, and the swirled airflow may be in close contact with the inner circumferential surface of the sidewall portion 1421 of the central tube 1420 by centrifugal force. Accordingly, the cooling performance of the central tube 1420 may be further improved.

According to an embodiment, the air swirler 1460 may be disposed to be spaced apart from the rear end 1422 of the central tube 1420. If the air swirler 1460 is located at a distal portion or at the rearward terminal of the rear end 1422 of the central tube 1420, the cooling performance may be reduced because there is little swirled airflow in the central tube 1420. Accordingly, the position of the air swirler 1460 is preferably arranged spaced apart from the rear end 1422 of the central tube 1420.

However, if the air swirler 1460 is positioned too far apart from the rear end 1422 of the central tube 1420, the cooling performance by the air swirler 1460 may be reduced. The swirled air may gradually increase straightness as the flow progresses, and accordingly, if the air swirler 1460 is positioned too far apart, the swirled airflow may hardly touch the rear end 1422 of the central tube 1420, which reduces the cooling performance. Accordingly, the air swirler 1460 is preferably disposed near the rear end 1422 of the central tube 1420 while being spaced apart from the rear end 1422 of the central tube 1420.

Also, if the air swirler 1460 is disposed in front of the inlet 1451 of the cooling channel 1450, since the air may not flow smoothly into the cooling channel 1450, according to an embodiment, the air swirler 1460 may preferably be disposed behind the inlet 1451 of the cooling channel 1450. According to an embodiment, the air swirler 1460 may be disposed between the inlet 1451 and the rear end 1422

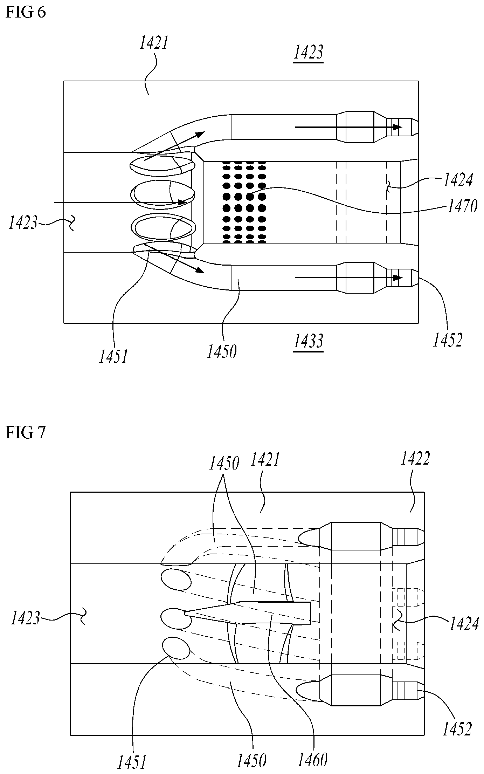

FIG. 6 is an enlarged schematic view illustrating a cooling channel of a nozzle module according to a second embodiment of the present invention.

Hereinafter, a combustor nozzle 1220 according to a second embodiment of the present invention will be described in detail with referenced to FIG. 6. The combustor nozzle 1220 according to the second embodiment of the present invention is the same as the combustor nozzle 1220 according to the first embodiment of the present invention, except for the air swirler 1460 and a turbulence-forming member 1470, so a redundant description thereof will be omitted.

In the combustor nozzle 1220 according to the second embodiment, the air swirler 1460 may be replaced by a turbulence-forming member 1470. The turbulence-forming member 1470 is configured to form a turbulence in the airflow in the air flow path 1423 of the central tube 1420. The turbulence-forming member 1470 may be formed in the form of a protrusion or protrusions on the inner circumferential surface of the sidewall portion 1421. When the air passes through the turbulence-forming member 1470, a turbulence is formed in the airflow, and thus, a flow rate of air supplied to the inner circumferential surface of the sidewall portion 1421 may increase. Accordingly, the cooling performance of the central tube 1420 may be further improved.

According to an embodiment, the turbulence-forming member 1470 may be disposed to be spaced apart from the rear end 1422 of the central tube 1420. If the turbulence-forming member 1470 is located at a distal portion or at the rearend terminal of the rear end 1422 of the central tube 1420, the cooling performance may be reduced because the turbulent airflow is hardly formed inside the central tube 1420. Accordingly, it is preferable that the position of the turbulence-forming member 1470 is arranged spaced apart from the rear end 1422 of the central tube 1420.

However, if the turbulence-forming member 1470 is too far apart from the rear end 1422 of the central tube 1420, the cooling performance by the turbulence-forming member 1470 may rather decrease. The turbulent airflow may gradually change to a laminar flow as the flow progresses. Accordingly, if the turbulence-forming member 1470 is positioned too far apart from the rear end 1422 of the central tube 1420, a laminar airflow flows in the rear end 1422 of the central tube 1420, which reduces cooling performance. Accordingly, the turbulence-forming member 1470 is preferably disposed near the rear end 1422 of the central tube 1420 while being spared apart from the rear end 1422 of the central tube 1420.

Also, if the turbulence-forming member 1470 is disposed in front of the inlet 1451 of the cooling channel 1450, since the air may not flow smoothly into the cooling channel 1450, according to an embodiment the turbulence-forming member 1470 may preferably be disposed behind the inlet 1451 of the cooling channel 1450. According to an embodiment, the turbulence-forming member 1470 may be disposed between the inlet 1451 and the rear end 1422.

According to embodiment, the air flow path 1423 is formed such that the internal width of the air flow path 1423 is decreased between the inlet of the 1451 and the turbulence-forming member 1470 in a direction toward the rear end 1422.

FIG. 7 is an enlarged schematic view illustrating a cooling channel of a nozzle module according to a third embodiment of the present invention.

Hereinafter, a combustor nozzle 1220 according to a third embodiment of the present invention will be described in detail with reference to FIG. 7. The combustor nozzle 1220 according to the third embodiment of the present invention is the same as the combustor nozzle 1220 according to the first embodiment of the present invention, except for the cooling channel 1450, so a redundant description thereof will be omitted.

In the combustor nozzle 1220 according to the third embodiment of the present invention, a plurality of cooling channels 1450 may be formed in a spiral shape. The plurality of cooling channels 1450 may be spirally formed from the inlet 1451 toward the outlet 1452 in the sidewall portion 1421 of the central tube 1420. That is, the plurality of cooling channels 1450 may be formed in a multi-helical shape.

In this case, the cooling channel 1450 may be formed to extend along the circumferential and axial directions in the sidewall portion 1421. In the cooling channel 1450 of the spiral structure, since air used for cooling flows more evenly in the sidewall portion 1421, there is an advantage of further increasing the cooling performance of the central tube 1420.

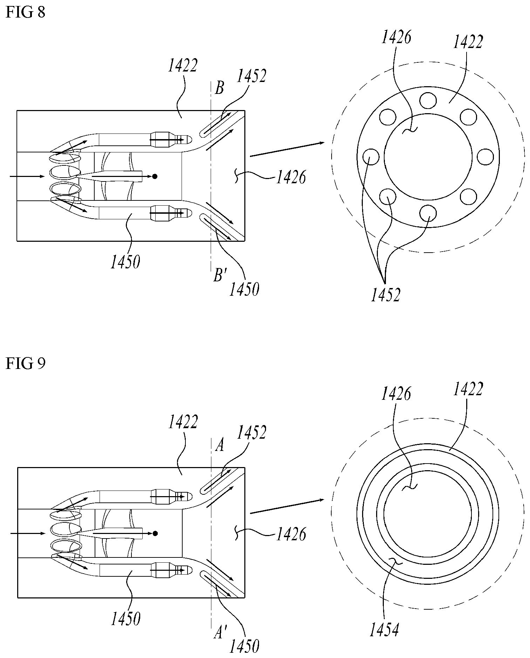

FIG. 8 is an enlarged schematic view illustrating a cooling channel of a nozzle module according to a fourth embodiment of the present invention, and FIG. 9 illustrates a modified example of FIG. 8. In FIG. 8, the cross sectional view of the cooling channel of a nozzle in a direction B-B' is depicted on the right. In FIG. 9, the cross sectional view of the cooling channel of a nozzle in a direction A-A' is depicted on the right.

Hereinafter, a combustor nozzle 1220 according to a fourth embodiment of the present invention will be described in detail with reference to FIGS. 8 and 9. The combustor nozzle 1220 according to the fourth embodiment of the present invention is the same as the combustor nozzle 1220 according to the first embodiment of the present invention, except for an expansion part 1426, so a redundant description thereof will be omitted.

The combustor nozzle 1220 according to the fourth embodiment of the present invention further includes an expansion part 1426. The expansion part 1426 is formed in the opening hole 1424 at the rear end 1422 of the central tube 1420. The expansion part 1426 is a portion in which a flow cross-sectional area increases toward the rear side or from the upstream to the downstream. When the expansion part 1426 is formed in the opening hole 1424 located at the rear end of the central tube 1420, the air may spread out in the radial direction while being discharged from the central tube 1420, so the cooling performance of the central tube 1420 may be further improved.

When the expansion part 1426 is formed in the central tube 1420, the outlet 1452 of the cooling channel 1450 may be formed to be inclined along the axial and radial directions of the central tube 1420 around the expansion part 1426. Specifically, the outlet 1452 of the cooling channel 1450 may be formed to extend in parallel with the inner surface of the expansion part 1426 to correspond to the shape of the extended flow path of the expansion part 1426. In this case, since the air discharged from the cooling channel 1450 spread out not only in the axial direction but also in the radial direction, the cooling performance may be further improved.

According to an embodiment, when the expansion part 1426 is formed in the central tube 1420, a second annular flow path 1454 may be formed around the expansion part 1426. The second annular flow path 1454 is an annular flow path along the circumferential direction in the sidewall portion 1421 of the central tube 1420. The second annular flow path 1454 may have a cross-section corresponding to the cross-section of the expansion part 1426. According to an embodiment, a cross section of an annular shape of the second annular flow path 1454 is concentric with a cross section of an annular shape of the expansion part 1426. Accordingly, the portion of the sidewall portion 1421 where the second annular flow path 1454 is formed may have a double wall structure. All outlets 1452 of the plurality of cooling channels 1450 may communicate with the second annular flow path 1454. For this reason, air discharged from each of the outlets 1452 of the cooling channel 1450 may flow into and circulate along the second annular flow path 1454, and then discharged to the outside from the rear end 1422 of the central tube 1420. As the second annular flow path 1454 is formed, the airflow discharged from the cooling channel 1450 may be formed more uniformly, which provides an advantage that higher cooling performance may be expected in the central tube 1420.

While the embodiments of the present invention have been described, it will be apparent to those skilled in the art that various modifications and variations can be made in the present invention through addition, change, omission, or substitution of components without departing from the scope of the invention as set forth in the appended claims. Also, it is noted that any one feature of an embodiment of the present invention described in the specification may be applied to another embodiment of the present invention.

## Claims

1. A combustor nozzle (1120) comprising a nozzle module, the nozzle module (1400) comprising:
a central tube (1420) having an air flow path (1423), through which air flows from a front-to-rear direction, and an opening hole at a rear end thereof, the central tube (1420) being a tubular member and including a sidewall portion (1421) which has an inner surface (1421a) and an outer surface (1421b), wherein the sidewall portion (1421) has a predetermined thickness which is the distance between the inner surface (1421a) and the outer surface (1421b);
a shroud (1430) into which at least a part of the central tube (1420) is inserted, and having an air inlet at a front end thereof, wherein a fuel port is formed in the central tube (1420), the fuel port being configured to inject fuel into a mixing flow path (1433) which is formed between the shroud (1430) and the central tube (1420) so that the air and the injected fuel flow therethrough; and
a plurality of cooling channels (1450), each of the plurality of cooling channels (1450) extending rearward from an inlet (1451) communicating with the air flow path (1423) to an outlet (1452) communicating with the mixing flow path (1433) while passing through the sidewall portion (1421) of the central tube (1420), wherein an opening of the inlet (1451) of the cooling channel (1450) is formed and disposed in the inner surface (1421a) of the sidewall portion (1421), and wherein the plurality of cooling channels (1450) are disposed in the sidewall portion (1421) between the inner surface (1421a) and the outer surface (1421b) so that a portion of the sidewall portion (1421) is disposed between the cooling channel (1450) and the air flow path (1423) while another portion of the sidewall portion (1421) is disposed between the cooling channel (1450) and the mixing flow path (1433).

2. The combustor nozzle according to claim 1, wherein the outlet of the cooling channel (1450) is formed at the rear end of the central tube (1420).

3. The combustor nozzle according to claim 1 or 2, wherein a first annular flow path (1453) is formed in the sidewall portion of the central tube (1420) to allow the plurality of cooling channels (1450) to communicate with each other.

4. The combustor nozzle according to claim 3, wherein the first annular flow path (1453) is disposed between the inlet and the outlet of the cooling channel (1450).

5. The combustor nozzle according to claim 1, wherein an air swirler (1460) is disposed in the air flow path (1423) for turning an airflow.

6. The combustor nozzle according to claim 5, wherein the air swirler (1460) is disposed to be spaced apart from the rear end of the central tube (1420).

7. The combustor nozzle according to claim 5, wherein the air swirler (1460) is disposed behind the inlet of the cooling channel (1450).

8. The combustor nozzle according to claim 1, wherein a turbulence-forming member (1470) is disposed in the air flow path (1423) for forming a turbulence in the airflow.

9. The combustor nozzle according to claim 8, wherein the turbulence-forming member (1470) is disposed to be spaced apart from the rear end of the central tube (1420).

10. The combustor nozzle according to claim 8, wherein the turbulence-forming member (1470) is disposed behind the inlet of the cooling channel (1450).

11. The combustor nozzle according to claim 1, wherein the plurality of cooling channels (1450) is disposed in parallel in the sidewall portion (1421) of the central tube (1420).

12. The combustor nozzle according to claim 1, wherein the plurality of cooling channels (1450) is spirally disposed in the sidewall portion (1421) of the central tube (1420).

13. The combustor nozzle according to claim 1, wherein the opening hole of the central tube (1420) is provided with an expansion part (1426) having a flow cross-sectional area increasing toward a rear end thereof.

14. The combustor nozzle according to claim 13, wherein the outlet of the cooling channel (1450) is formed at the rear end of the central tube (1420) so as to inclined in axial and radial directions around the expansion part (1426).

15. The combustor nozzle according to claim 13, wherein a second annular flow path (1454) is formed around the expansion part (1426) and the rear end of the central tube (1420) so that one end thereof communicates with all of the outlets of the cooling channels (1450) and the other end thereof communicates with the mixing flow path (1433).

## Patentansprüche

1. Brennkammerdüse (1120) mit einem Düsenmodul, das Düsenmodul (1400) umfassend:
ein mittleres Rohr (1420) mit einem Luftströmungspfad (1423), durch den die Luft von vorne nach hinten strömt, und einem Öffnungsloch an seinem hinteren Ende, wobei das mittlere Rohr (1420) ein rohrförmiges Element ist und einen Seitenwandabschnitt (1421) aufweist, der eine Innenfläche (1421a) und eine Außenfläche (1421b) hat, wobei der Seitenwandabschnitt (1421) eine vorbestimmte Dicke hat, die der Abstand zwischen der Innenfläche (1421a) und der Außenfläche (1421b) ist;
eine Ummantelung (1430), in die mindestens ein Teil des mittleren Rohrs (1420) eingesetzt ist und die an ihrem vorderen Ende einen Lufteinlass aufweist, wobei in dem mittleren Rohr (1420) eine Kraftstofföffnung gebildet ist, wobei die Kraftstofföffnung eingerichtet ist, um Kraftstoff in einen Mischströmungspfad (1433) einzuspritzen, der zwischen der Ummantelung (1430) und dem mittleren Rohr (1420) gebildet ist, so dass die Luft und der eingespritzte Kraftstoff hindurchströmen; und
eine Vielzahl von Kühlkanälen (1450), wobei sich jeder der Vielzahl von Kühlkanälen (1450) von einem Einlass (1451), der mit dem Luftströmungspfad (1423) in Verbindung steht, zu einem Auslass (1452), der mit dem Mischströmungspfad (1433) in Verbindung steht, nach hinten erstreckt, während er durch den Seitenwandabschnitt (1421) des mittleren Rohrs (1420) verläuft, wobei eine Öffnung des Einlasses (1451) des Kühlkanals (1450) in der Innenfläche (1421a) des Seitenwandabschnitts (1421) gebildet und angeordnet ist, und wobei die Vielzahl von Kühlkanälen (1450) in dem Seitenwandabschnitt (1421) zwischen der Innenfläche (1421a) und der Außenfläche (1421b) angeordnet ist, so dass ein Abschnitt des Seitenwandabschnitts (1421) zwischen dem Kühlkanal (1450) und dem Luftströmungspfad (1423) angeordnet ist, während ein anderer Abschnitt des Seitenwandabschnitts (1421) zwischen dem Kühlkanal (1450) und dem Mischströmungspfad (1433) angeordnet ist.

2. Brennkammerdüse nach Anspruch 1, wobei der Auslass des Kühlkanals (1450) am hinteren Ende des mittleren Rohres (1420) gebildet ist.

3. Brennkammerdüse nach Anspruch 1 oder 2, wobei ein erster ringförmiger Strömungspfad (1453) im Seitenwandabschnitt des mittleren Rohrs (1420) gebildet ist, damit die mehreren Kühlkanäle (1450) miteinander in Verbindung stehen können.

4. Brennkammerdüse nach Anspruch 3, wobei der erste ringförmige Strömungspfad (1453) zwischen dem Einlass und dem Auslass des Kühlkanals (1450) angeordnet ist.

5. Brennkammerdüse nach Anspruch 1, wobei im Luftströmungspfad (1423) ein Luftverwirbler (1460) zum Drehen eines Luftstroms angeordnet ist.

6. Brennkammerdüse nach Anspruch 5, wobei der Luftverwirbler (1460) derart angeordnet ist, dass er vom hinteren Ende des mittleren Rohres (1420) beabstandet ist.

7. Brennkammerdüse nach Anspruch 5, wobei der Luftverwirbler (1460) hinter dem Einlass des Kühlkanals (1450) angeordnet ist.

8. Brennkammerdüse nach Anspruch 1, wobei in dem Luftströmungspfad (1423) ein turbulenzbildendes Element (1470) zum Bilden einer Turbulenz in dem Luftstrom angeordnet ist.

9. Brennkammerdüse nach Anspruch 8, wobei das turbulenzbildende Element (1470) derart angeordnet ist, dass es von dem hinteren Ende des mittleren Rohrs (1420) beabstandet ist.

10. Brennkammerdüse nach Anspruch 8, wobei das turbulenzbildende Element (1470) hinter dem Einlass des Kühlkanals (1450) angeordnet ist.

11. Brennkammerdüse nach Anspruch 1, wobei die Vielzahl von Kühlkanälen (1450) parallel im Seitenwandabschnitt (1421) des mittleren Rohres (1420) angeordnet ist.

12. Brennkammerdüse nach Anspruch 1, wobei die Vielzahl der Kühlkanäle (1450) spiralförmig im Seitenwandabschnitt (1421) des mittleren Rohrs (1420) angeordnet ist.

13. Brennkammerdüse nach Anspruch 1, wobei das Öffnungsloch des mittleren Rohrs (1420) mit einem Expansionsteil (1426) versehen ist, wobei die Strömungsquerschnittsfläche davon zu einem hinteren Ende hin zunimmt.

14. Brennkammerdüse nach Anspruch 13, wobei der Auslass des Kühlkanals (1450) am hinteren Ende des mittleren Rohrs (1420) gebildet ist, um sich in axialer und radialer Richtung um das Expansionsteil (1426) zu neigen.

15. Brennkammerdüse nach Anspruch 13, wobei ein zweiter ringförmiger Strömungspfad (1454) um das Expansionsteil (1426) und das hintere Ende des mittleren Rohrs (1420) herum gebildet ist, so dass ein Ende davon mit allen Auslässen der Kühlkanäle (1450) und das andere Ende davon mit dem Mischströmungspfad (1433) in Verbindung steht.

## Revendications

1. Buse de chambre de combustion (1120), comprenant un module de buse, ledit module de buse (1400) comprenant :
un tube central (1420) présentant un chemin d'écoulement d'air (1423) par lequel l'air s'écoule dans une direction de l'avant vers l'arrière, et un trou d'ouverture à son extrémité arrière, ledit tube central (1420) étant un élément tubulaire comportant une partie de paroi latérale (1421) ayant une surface intérieure (1421a) et une surface extérieure (1421b), ladite partie de paroi latérale (1421) ayant une épaisseur définie, laquelle est la distance entre la surface intérieure (1421a) et la surface extérieure (1421b) ;
un carénage (1430) dans lequel au moins une partie du tube central (1420) est insérée, et présentant une entrée d'air à son extrémité avant, un orifice à combustible étant formé dans le tube central (1420), ledit orifice à combustible étant prévu pour injecter un combustible dans un chemin d'écoulement de mélange (1433) formé entre le carénage (1430) et le tube central (1420), de sorte que de l'air et le combustible injecté y circulent ; et
une pluralité de canaux de refroidissement (1450), chaque canal de la pluralité de canaux de refroidissement (1450) s'étendant vers l'arrière depuis une entrée (1451) communiquant avec le chemin d'écoulement d'air (1423) vers une sortie (1452) communiquant avec le chemin d'écoulement de mélange (1433) en traversant la partie de paroi latérale (1421) du tube central (1420), une ouverture de l'entrée (1451) du canal de refroidissement (1450) étant formée et disposée dans la surface intérieure (1421a) de la partie de paroi latérale (1421), et la pluralité de canaux de refroidissement (1450) étant disposés dans la partie de paroi latérale (1421) entre la surface intérieure (1421a) et la surface extérieure (1421b), de sorte qu'une section de la partie de paroi latérale (1421) est disposée entre le canal de refroidissement (1450) et le chemin d'écoulement d'air (1423), tandis qu'une autre section de la partie de paroi latérale (1421) est disposée entre le canal de refroidissement (1450) et le chemin d'écoulement de mélange (1433).

2. Buse de chambre de combustion selon la revendication 1, où la sortie du canal de refroidissement (1450) est formée à l'extrémité arrière du tube central (1420).

3. Buse de chambre de combustion selon la revendication 1 ou la revendication 2, où un premier chemin d'écoulement annulaire (1453) est formé dans la partie de paroi latérale du tube central (1420) pour permettre à la pluralité de canaux de refroidissement (1450) de communiquer entre eux.

4. Buse de chambre de combustion selon la revendication 3, où le premier chemin d'écoulement annulaire (1453) est disposé entre l'entrée et la sortie du canal de refroidissement (1450).

5. Buse de chambre de combustion selon la revendication 1, où un générateur de turbulences d'air (1460) est disposé dans le chemin d'écoulement d'air (1423) pour retourner un flux d'air.

6. Buse de chambre de combustion selon la revendication 5, où le générateur de turbulences d'air (1460) est disposé de manière à être espacé de l'extrémité arrière du tube central (1420).

7. Buse de chambre de combustion selon la revendication 5, où le générateur de turbulences d'air (1460) est disposé derrière l'entrée du canal de refroidissement (1450).

8. Buse de chambre de combustion selon la revendication 1, où un élément de génération de turbulence (1470) est disposé dans le chemin d'écoulement d'air (1423) pour générer une turbulence dans le flux d'air.

9. Buse de chambre de combustion selon la revendication 8, où l'élément de génération de turbulence (1470) est disposé de manière à être espacé de l'extrémité arrière du tube central (1420).

10. Buse de chambre de combustion selon la revendication 8, où l'élément de génération de turbulence (1470) est disposé derrière l'entrée du canal de refroidissement (1450).

11. Buse de chambre de combustion selon la revendication 1, où la pluralité de canaux de refroidissement (1450) sont disposés en parallèle dans la partie de paroi latérale (1421) du tube central (1420).

12. Buse de chambre de combustion selon la revendication 1, où la pluralité de canaux de refroidissement (1450) sont disposés en spirale dans la partie de paroi latérale (1421) du tube central (1420).

13. Buse de chambre de combustion selon la revendication 1, où le trou d'ouverture du tube central (1420) est pourvu d'une partie d'expansion (1426) dont la surface de section transversale d'écoulement augmente dans la direction de son extrémité arrière.

14. Buse de chambre de combustion selon la revendication 13, où la sortie du canal de refroidissement (1450) est formée à l'extrémité arrière du tube central (1420) de manière à être inclinée dans les directions axiale et radiale autour de la partie d'expansion (1426).

15. Buse de chambre de combustion selon la revendication 13, où un deuxième chemin d'écoulement annulaire (1454) est formé autour de la partie d'expansion (1426) et de l'extrémité arrière du tube central (1420), de sorte qu'une de ses extrémités communique avec toutes les sorties des canaux de refroidissement (1450), et que son autre extrémité communique avec le chemin d'écoulement de mélange (1433).
